# EUROPEAN PATENT SPECIFICATION

(11) **EP 2 278 874 B1**
(45) Date of publication and mention of the grant of the patent: **20.03.2019**
(21) Application number: 09734235.6
(22) Date of filing: 21.04.2009
(51) Int. Cl.: A01N 1/02

(54) **FLUIDICS-BASED PULSATILE PERFUSION ORGAN PRESERVATION DEVICE**
AUF FLUIDSTRÖMUNG BASIERENDE ORGANKONSERVIERUNGSVORRICHTUNG MIT PULSIERENDER PERFUSION
DISPOSITIF DE PRÉSERVATION D'ORGANE À PERFUSION PULSÉE DE FLUIDES

(30) Priority: 22.04.2008 US 46951
(43) Date of publication of application: 02.02.2011
(73) Proprietor: The Board of Regents of The University of Texas System, Austin, TX 78701 (US)
(72) Inventor: BUNEGIN, Leonid, San Antonio, TX 78229 (US); GELINEAU, Edward, F., San Antonio, TX 78229 (US)
(74) Representative: Ashton, Timothy
(86) International application number: PCT/US2009/041274
(87) International publication number: WO 2009/132018

(56) References cited:
- WO-A1-97/45527
- WO-A2-2006/112720
- US-A- 5 356 771
- US-A- 5 362 622
- US-A1- 2005 255 442

## Description

### BACKGROUND INFORMATION

Exemplary embodiments of the present invention relates to a method and apparatus for highly portable, pulsatile perfusion for long-term extracorporeal preservation of the living tissue.

Although tissue transplantation and implantation have been viable since the 1960's, and have increased in popularity since that time, techniques for preservation of tissue have not become normalized. Initially, simple cold storage was used. Perfused cold storage and hyperbaric cold perfused storage were subsequently shown experimentally to be superior to simple unperfused cold storage. Since both techniques could not be practically applied, nonperfused cold storage continued to be preferred. A disadvantage of simple nonperfused cold storage, however, is the limited period of viability of the tissue, typically due to significant oxygen decline in the storage medium resulting from the stored tissue's metabolic need for oxygen.

Because of the distance that often separates tissue donors and recipients, the portability of storage devices is of critical importance. In addition, the desire to increase the pool of tissue available for transplantation into any one recipient mandates that the storage time for the tissue be extended beyond that permitted with simple hypothermic storage, thus opening the possibility for a world- wide network of donors and recipients.

Pulsatile perfusion devices have been developed to sustain and extend the viability of extracorporeal living tissue for several hours pending the implant of the tissue. The advantage of this technique is that it mimics the natural state of the tissue by inducing flow through its arterial supply with oxygenated fluid, or perfusate. However, only limited success has been achieved with perfusion of tissue in the atmosphere (i.e., without submersing the perfused tissue in the perfusate). The danger of this method of perfusion is that a pressure gradient may develop across the capillary wall of the tissue, which is proportionate to the output of the perfusion pump. Under hypothermic conditions, perfusion pressures in excess of 2.7kPa (20 mm Hg) have resulted in capillary damage destroying and compromising the viability of the tissue being preserved.

Hypothermic pulsatile perfusion of tissue during storage can significantly extend storage time to 12-24 hours, without loss of tissue viability, due to reduced tissue metabolic rate and oxygen consumption. For example, cooling to 15 degree C reduces oxygen consumption of myocardial tissue to one-fifth of the rate at normal body temperature. However, hypothermia alone is less protective than when it is combined with oxygenated perfusion, in that a continuous supply of oxygen is available in the latter case to support the metabolic oxygen requirements.

Hypothermic perfusion devices have been designed and are known in the art. However, devices that are currently available for hypothermic pulsatile perfusion are large, require significant volumes of compressed gas and electrical power, and/or also may necessitate an upright level orientation for operation. Additionally, these devices are very complex, consisting of many intricate parts that must work precisely in concert.

One such device is that contemplated by Doerig, U.S. Pat. No. 3,914,954. Doerig appears to disclose an organ perfusion device that, in one embodiment, submerges the organ being preserved in the perfusate and pumps perfusate through the organ. The perfusate is oxygenated through a separate gas inlet valve. No provision is made, however, for sealing the perfusate from the lid of the device, thus leaving the perfusate open to the atmosphere, permitting the level of the perfusate to fluctuate, and providing a means by which biological or chemical contaminants can enter the system. Like most conventional perfusing units, the Doerig device is significantly limited in its portability due to the necessity of maintaining the device in an upright level orientation. Travel over extended distances, as is becoming increasingly necessary in modern times, would increase the likelihood of upsetting this delicate balance and endangering the organ. The additional requirement of large volumes of compressed oxygen and electrical power make usage of this apparatus impractical.

Additional examples of organ preservation devices are disclosed in International patent publication number WO 97/45527 and in U.S. Patents No. 5,362,622; 5,385,821; and 5,356,771.

### SUMMARY OF INVENTION

According to the invention we provide an organ preservation apparatus comprising the features of claim 1.

### BRIEF DESCRIPTION OF FIGURES

FIG. 1 illustrates a section view of an organ preservation device according to exemplary embodiments of the present disclosure;
FIG. 2 illustrates a detailed view of an organ coupled to a component of the embodiment of FIG. 1;
FIG. 3 illustrates a detailed view of an organ coupled to a component of the embodiment of FIG. 1; and
FIG. 4 illustrates a view of the embodiment of FIG. 1 in a case with additional components.

### DETAILED DESCRIPTION OF EXEMPLARY EMBODIMENTS

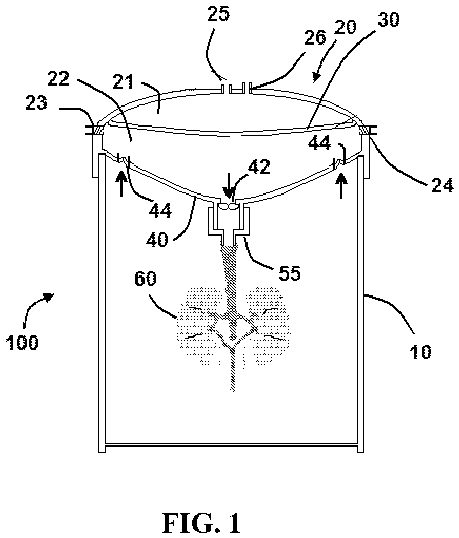

Referring initially to the exemplary embodiment shown in FIGS. 1-3, an organ preservation device 100 comprises an organ storage compartment 10 and a cover assembly 20. In specific embodiments, organ preservation device 100 may be comprised of a clear Lexan material having a compliance between 0.08 and 0.11 ml/mmHg. Cover assembly 20 further comprises a membrane 30 and an organ support plate 40. Membrane 30 divides the interior volume of cover assembly 20 into a pumping compartment 21 and a perfuse compartment 22. Perfuse compartment 22 comprises a pair of priming valves 23 and 24, while pumping compartment 21 comprises an inlet port 25 and an atmospheric vent 26. In specific embodiments, membrane 30 is a circular concave elastic oxygen permeable membrane that is concave (when viewed from above in FIG. 1) or convex (when viewed from below in FIG. 1).

Organ support plate 40 further includes a supply port 42 located proximal to the center of organ support plate 40 and multiple return ports 44 located proximal to the perimeter of support plate 40. In specific embodiments, supply port 42 is a tricuspid valve that allows flow out of perfuse compartment 22 and into an organ 60. Return ports 44 may be located approximately 45 degrees apart from each other and 1 centimeter from the perimeter of organ support plate 40 and can allow flow back into perfuse compartment 22 from the chamber in which organ 60 is located. In certain exemplary embodiments, cover assembly 20 comprises a lid and organ support plate 40 as an integral unit, to reduce the number of parts during assembly and reduce the chance of operator error.

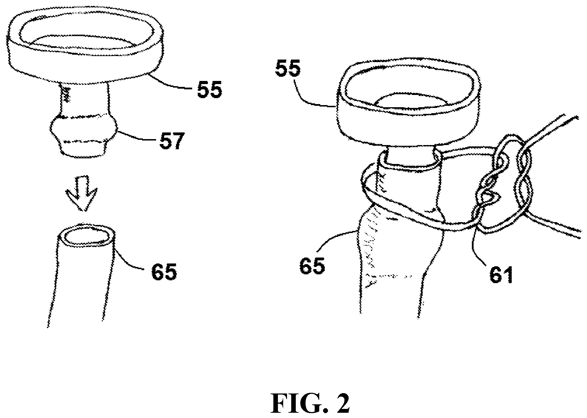

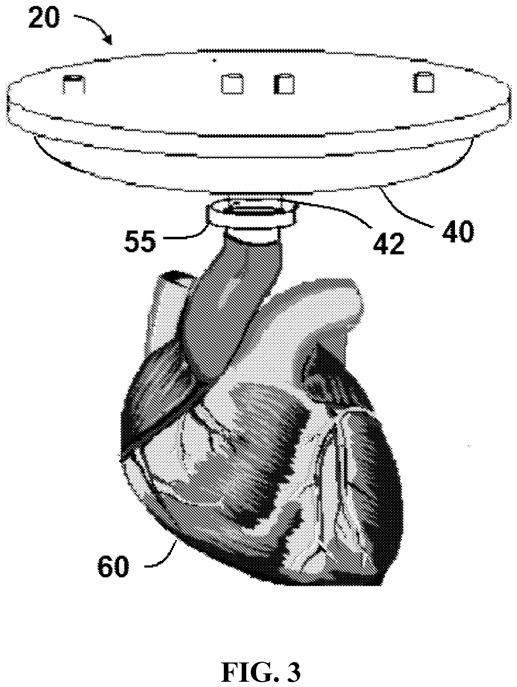

As shown in the more detailed views of FIGS. 2 and 3, an interface coupler 55 is used to couple supply port 42 to organ 60. Interface coupler 55 can be secured to an arterial supply vessel 57 of organ 60 via umbilical tape 61. In certain embodiments, interface coupler 55 comprises a slippage restraint 57 that can reduce the likelihood that interface coupler 55 and organ 60 become separated. Organ support plate 40 is convex in shape when viewed from organ storage compartment 10 (or concave when viewed from perfuse compartment 22). In specific embodiments, supply port 42 is a tricuspid valve. Such a configuration can provide better forward flow into organ 60 during systole with less back flow during diastole during both upright, inclined, and upside down operation. This configuration may also allow for more effective expulsion of air from organ's arterial vessel during priming of organ 60 with preservation solution. Centrally locating supply port 42 can also reduce the likelihood that arterial supply vessel 57 becomes kinked.

A donor organ 60 can be attached to the supply port 42 via interface coupler 55 on organ support plate 40. Cover assembly 20 and organ 60 may be lowered into the organ storage compartment 10, which is filled with preservation solution (or perfusate). The convex shape of organ support plate 40 displaces preservation fluid as it is lowered forming an organ storage compartment 10 devoid of air. Valves 23 and 24 allow for priming perfuse compartment 22 and organ 60. Tubing (not shown) conveys oxygen to pumping compartment 21 via inlet 25 from a fluidics pulsar (not shown). In specific embodiments, the micro-fluidics pulsar attached to the oxygen source (for example, a compressed oxygen cylinder, not shown) oscillates between positive pressure and vent approximately 70 times/minute. As compared to previous devices, the use of a micro-fluidics pulsar can significantly reduce oxygen use during operation with little or no reduction in gas exchange in the preservation solution. By locating the micro-fluidics pulsar on the oxygen cylinder, the cost of organ preservation device can be reduced and the regulation of oxygen flow can be improved.

During the positive pressure portion of the cycle, inflowing oxygen simultaneously oxygenated and causes expansion of oxygen-permeable membrane 30 forcing the oxygenated preservation solution through supply port 42 into the organ 60. Preservation solution in organ 60 can then be displaced exiting the through the organ venous system into the organ storage chamber 10. In the embodiment shown, organ storage chamber 10 expands to accommodate the exiting fluid. During the vent portion of the cycle, the elastic energy stored in the organ storage chamber 10 forces the preservation fluid back through the return valves 44 into perfuse compartment 22 allowing for carbon dioxide/oxygen exchange in the perfusion solution. Organ 60 is therefore maintained in a viable condition for greater periods of time by forcing oxygenated perfusate through the organ.

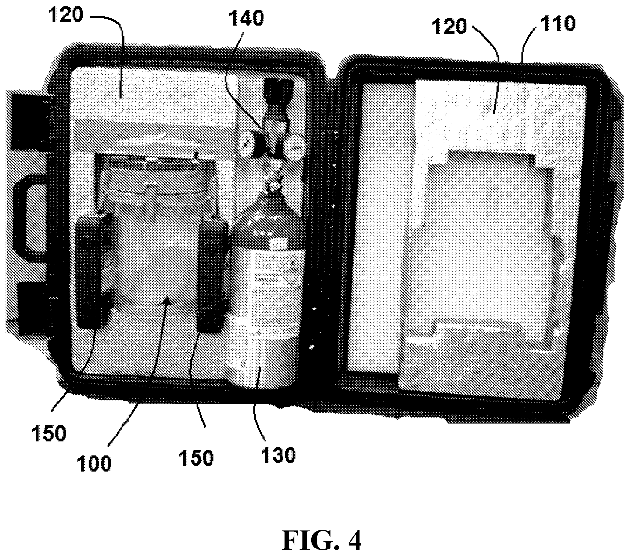

Referring now to FIG. 4, organ preservation device 100 is shown fitted into a case 110 with insulation 120, a pressurized oxygen source 130, a microfluidics pulsar 140, and cold packs 150. In specific embodiments, the temperature is maintained between 4-5°C within case 110. Maintaining organ 60 at a lower temperature and providing oxygenated fluid to the organ preserves the organ for greater periods of time before the organ is transplanted to a recipient.

A specific example of one series of steps that may be used in exemplary embodiments of methods in accordance with this disclosure is provided below.

### EXAMPLE

Protocol for installing harvested organ into the organ preservation Prototype
1. Remove organ storage capsule from Transport case.
   a. Place organ storage capsule onto a flat stable surface.
2. Place frozen refrigerant packs into position within transport case.
   a. Frozen refrigerant pack should be at -20 C° for a minimum of 12 hours.
3. Unclasp the four (4) latches and remove the lid/organ interface assembly.
4. Fill organ storage compartment with cold (4<0>C) Viaspan or other comparable fluid. (Note: The exact amount will depend on the size of the organ).
5. Select a connector that will fit snugly into the arterial supply vessel of the organ.
6. Insert this connector into the arterial supply vessel completely and snugly tie the vessel into position with the supplied umbilical tape above the slippage restraint.
7. Attach the connector to the interface plate outflow port. (Located centrally on the underside of the lid/organ interface assembly).
8. Insert the organ into the storage compartment and seat the lid/organ interface assembly onto the lip of the storage compartment taking care to eliminate trapped air. If air should become trapped, raise lid/organ interface assembly so that additional preservation solution can be added then reseat.
9. Engage clasps so as to secure the lid to the container.
10. Through the filler port on the top of the lid inject additional cold preservation solution so as to fill the pumping chamber, visually confirming that all air has been expelled.
11. Attach oxygen supply to the O2 supply port, control line to control port and turn oxygen supply cylinder valve counterclockwise one half turn.
12. Check cylinder pressure to verify full capacity (needle in green region).
13. Place organ capsule into transport case, and pressurize fluidic actuator to approximately 17.2 to 20.7 kPa (2.5 to 3.0 psi).
14. Close lid of transport case and secure latch lock.

## Claims

1. An organ preservation apparatus comprising:
an organ storage compartment (10); and
a cover assembly (20) configured to engage the organ storage compartment, the cover assembly comprising:
an upper lid;
an organ support plate (40);
an oxygen-permeable membrane (30) disposed between the upper lid and the organ support plate;
a pumping compartment (21) between the oxygen-permeable membrane and the upper lid;
a perfuse compartment (22) between the oxygen-permeable membrane and the organ support plate;
**characterized in that** the organ support plate is a convex organ support plate, and the cover assembly further comprises:
a first port (42) in the convex organ support plate configured to allow flow from the perfuse compartment to the organ storage compartment, wherein the first port is located proximal to the center of the organ support plate;
an interface coupler (55), couplable to the first port and an organ, wherein the interface coupler forms a connection between the first port and the organ ; and
a second port (44) in the convex organ support plate configured to allow flow from the organ storage compartment to the perfuse compartment.

2. The organ preservation apparatus of claim 1 wherein the first port comprises a tricuspid valve.

3. The organ preservation apparatus of claim 1 wherein the oxygen-permeable membrane is concave when viewed from the pumping compartment.

4. The organ preservation apparatus of claim 1 wherein the pumping compartment comprises an inlet port (25) coupled to a micro-fluidics pulsar.

5. The organ preservation apparatus of claim 4 wherein the micro-fluidics pulsar is located on an oxygen container in fluid communication with the pumping compartment.

6. The organ preservation apparatus of claim 4 wherein the micro-fluidics pulsar is configured to oscillate between a higher pressure and a lower pressure approximately 70 times per minute.

7. The organ preservation apparatus of claim 1 wherein the cover assembly comprises a pair of one-way valves (23, 24) configured to prime the perfuse compartment and the organ storage compartment.

8. The organ preservation apparatus of claim 1, wherein the organ storage compartment and cover assembly are fitted into a case (110) with insulation (120).

9. The organ preservation apparatus of claim 8, further comprising one or more cold packs (150) located within the case.

10. The organ preservation apparatus of claim 8, further comprising a micro fluidics pulsar (140) located within the case.

11. A method of perfusing and oxygenating living tissue, comprising:
providing an organ preservation apparatus according to claim 1;
separating the cover assembly from the organ storage compartment;
adding a perfusate to the perfusion compartment and the organ storage compartment;
coupling an organ to the first port in the convex organ support plate;
immersing the organ into said perfusate in said tissue compartment;
providing a source of pressurized oxygen coupled to the inlet port in the pumping compartment;
using a micro-fluidics pulsar to provide pressure fluctuations within the pumping compartment;
flexing said oxygen-permeable membrane in a first direction in response to the pressure differentials within the pumping compartment so as to displace perfusate from said perfusion compartment through the first port and into the organ; flexing said oxygen-permeable membrane in second direction opposite to said first direction to displace perfusate from the organ storage compartment through said second port into said perfusion compartment; and
removing gas from said organ preservation device by allowing permeation of said gas through said oxygen-permeable membrane from said perfusion compartment to said pumping compartment and exhausting said gas from said pumping compartment.

12. The method of claim 11, further comprising: providing an insulated case; and placing the organ preservation apparatus in the insulated case.

13. The method of claim 12, further comprising placing the source of pressurized oxygen in the insulated case.

14. The method of claim 12, further comprising placing the micro-fluidics pulsar in the insulated case.

15. The method of claim 12, further comprising placing one or more cold packs within the insulated case.

## Patentansprüche

1. Organkonservierungsvorrichtung, umfassend:
eine Organaufbewahrungskammer (10); und
eine Abdeckanordnung (20), die dafür konfiguriert ist, die Organaufbewahrungskammer in Eingriff zu nehmen, wobei die Abdeckanordnung umfasst:
einen oberen Deckel;
eine Organauflageplatte (40);
eine sauerstoffdurchlässige Membran (30), die zwischen dem oberen Deckel und der Organauflageplatte angeordnet ist;
eine Pumpkammer (21) zwischen der sauerstoffdurchlässigen Membran und dem oberen Deckel;
eine Perfusionskammer (22) zwischen der sauerstoffdurchlässigen Membran und der Organauflageplatte;
**dadurch gekennzeichnet, dass** die Organauflageplatte eine konvexe Organauflageplatte ist und die Abdeckanordnung ferner umfasst:
eine erste Öffnung (42) in der konvexen Organauflageplatte, die dafür konfiguriert ist, einen Fluss von der Perfusionskammer zur Organaufbewahrungskammer zu erlauben, worin sich die erste Öffnung proximal zur Mitte der Organauflageplatte befindet;
einen Schnittstellenkoppler (55), der an die erste Öffnung und ein Organ koppelbar ist, worin der Schnittstellenkoppler eine Verbindung zwischen der ersten Öffnung und dem Organ bildet; und
eine zweite Öffnung (44) in der konvexen Organauflageplatte, die dafür konfiguriert ist, einen Fluss von der Organaufbewahrungskammer zur Perfusionskammer zu erlauben.

2. Organkonservierungsvorrichtung nach Anspruch 1, worin die erste Öffnung eine Trikuspidalklappe umfasst.

3. Organkonservierungsvorrichtung nach Anspruch 1, worin die sauerstoffdurchlässige Membran konkav ist, wenn von der Pumpkammer aus betrachtet.

4. Organkonservierungsvorrichtung nach Anspruch 1, worin die Pumpkammer eine an einen Mikrofluidik-Pulsar gekoppelte Einlassöffnung (25) umfasst.

5. Organkonservierungsvorrichtung nach Anspruch 4, worin sich der Mikrofluidik-Pulsar auf einem Sauerstoffbehälter in Fluidkommunikation mit der Pumpkammer befindet.

6. Organkonservierungsvorrichtung nach Anspruch 4, worin der Mikrofluidik-Pulsar dafür konfiguriert ist, ungefähr 70 Mal pro Minute zwischen einem höheren Druck und einem niedrigeren Druck zu oszillieren.

7. Organkonservierungsvorrichtung nach Anspruch 1, worin die Abdeckanordnung ein Paar Einwegventile (23, 24) umfasst, die dafür konfiguriert sind, die Perfusionskammer und die Organaufbewahrungskammer vorzufüllen.

8. Organkonservierungsvorrichtung nach Anspruch 1, worin die Organaufbewahrungskammer und Abdeckanordnung in einen Koffer (110) mit Isolierung (120) eingepasst sind.

9. Organkonservierungsvorrichtung nach Anspruch 8, ferner umfassend eine oder mehrere innerhalb des Koffers befindliche Kältepackungen (150).

10. Organkonservierungsvorrichtung nach Anspruch 8, ferner umfassend einen innerhalb des Koffers befindlichen Mikrofluidik-Pulsar (140).

11. Verfahren zur Perfusion und Oxygenierung von lebendem Gewebe, umfassend:
Bereitstellen einer Organkonservierungsvorrichtung nach Anspruch 1;
Trennen der Abdeckanordnung von der Organaufbewahrungskammer;
Hinzufügen eines Perfusats zu der Perfusionskammer und der Organaufbewahrungskammer;
Koppeln eines Organs an die erste Öffnung in der konvexen Organauflageplatte;
Eintauchen des Organs in das Perfusat in der Gewebekammer;
Bereitstellen einer Quelle für druckbeaufschlagten Sauerstoff, die an die Einlassöffnung in der Pumpkammer gekoppelt ist;
Verwenden eines Mikrofluidik-Pulsars, um für Druckschwankungen innerhalb der Pumpkammer zu sorgen;
Biegen der sauerstoffdurchlässigen Membran in einer ersten Richtung als Reaktion auf die Druckdifferenziale innerhalb der Pumpkammer, um so Perfusat aus der Perfusionskammer durch die erste Öffnung und in das Organ zu verdrängen; Biegen der sauerstoffdurchlässigen Membran in einer zweiten Richtung entgegen der ersten Richtung, um Perfusat aus der Organaufbewahrungskammer durch die zweite Öffnung in die Perfusionskammer zu verdrängen; und
Entfernen von Gas aus der Organkonservierungsvorrichtung, indem Permeation des Gases durch die sauerstoffdurchlässige Membran von der Perfusionskammer zu der Pumpkammer und Ablassen des Gases aus der Pumpkammer ermöglicht werden.

12. Verfahren nach Anspruch 11, ferner umfassend: Bereitstellen eines isolierten Koffers; und Platzieren der Organkonservierungsvorrichtung in dem isolierten Koffer.

13. Verfahren nach Anspruch 12, ferner umfassend Platzieren der Quelle für druckbeaufschlagten Sauerstoff in dem isolierten Koffer.

14. Verfahren nach Anspruch 12, ferner umfassend Platzieren des Mikrofluidik-Pulsars in dem isolierten Koffer.

15. Verfahren nach Anspruch 12, ferner umfassend Platzieren einer oder mehrerer Kältepackungen innerhalb des isolierten Koffers.

## Revendications

1. Appareil de conservation d'un organe comprenant :
un compartiment de stockage d'un organe (10) ; et
un ensemble de fermeture (20) configuré pour se mettre en prise avec le compartiment de stockage d'un organe, l'ensemble de fermeture comprenant :
un couvercle supérieur ;
une plaque de support d'organe (40) ;
une membrane perméable à l'oxygène (30) disposée entre le couvercle supérieur et la plaque de support d'organe ;
un compartiment de pompage (21) entre la membrane perméable à l'oxygène et le couvercle supérieur ;
un compartiment de perfusion (22) entre la membrane perméable à
l'oxygène et la plaque de support d'organe ;
**caractérisé en ce que** la plaque de support d'organe est une plaque de support d'organe convexe, et l'ensemble de fermeture comprend en outre :
un premier orifice (42) dans la plaque de support d'organe convexe configuré pour permettre l'écoulement du compartiment de perfusion au compartiment de stockage d'un organe, dans lequel le premier orifice est situé à proximité du centre de la plaque de support d'organe ;
un raccord d'interface (55), pouvant se raccorder au premier orifice et à un organe, dans lequel le raccord d'interface forme un raccordement entre le premier orifice et l'organe ; et
un deuxième orifice (44) dans la plaque de support d'organe convexe configuré pour permettre l'écoulement du compartiment de stockage d'un organe vers le compartiment de perfusion.

2. Appareil de conservation d'un organe selon la revendication 1 dans lequel le premier orifice comprend une valve tricuspide.

3. Appareil de conservation d'un organe selon la revendication 1 dans lequel la membrane perméable à l'oxygène est concave en regardant du compartiment de pompage.

4. Appareil de conservation d'un organe selon la revendication 1 dans lequel le compartiment de pompage comprend un orifice d'entrée (25) raccordé à un pulsar microfluidique.

5. Appareil de conservation d'un organe selon la revendication 4 dans lequel le pulsar microfluidique est situé sur un récipient d'oxygène en communication fluidique avec le compartiment de pompage.

6. Appareil de conservation d'un organe selon la revendication 4 dans lequel le pulsar microfluidique est configuré pour osciller entre une pression élevée et une pression faible approximativement 70 fois par minute.

7. Appareil de conservation d'un organe selon la revendication 1 dans lequel l'ensemble de fermeture comprend une paire de valves unidirectionnelles (23, 24) configurées pour amorcer le compartiment de perfusion et le compartiment de stockage d'un organe.

8. Appareil de conservation d'un organe selon la revendication 1, dans lequel le compartiment de stockage d'organe et l'ensemble de fermeture sont installés dans un boîtier (110) ayant une isolation (120).

9. Appareil de conservation d'un organe selon la revendication 8, comprenant en outre un ou plusieurs sachets froids (150) situés dans le boîtier.

10. Appareil de conservation d'un organe selon la revendication 8, comprenant en outre un pulsar microfluidique (140) situé dans le boîtier.

11. Procédé de perfusion et d'oxygénation d'un tissu vivant, consistant à :
fournir un appareil de conservation d'un organe selon la revendication 1 ;
séparer l'ensemble de fermeture du compartiment de stockage d'un organe ;
ajouter un perfusât au compartiment de perfusion et au compartiment de stockage d'un organe ;
accoupler un organe au premier orifice dans la plaque de support d'organe convexe ;
immerger l'organe dans ledit perfusât dans ledit compartiment de tissu ;
fournir une source d'oxygène sous pression raccordée à l'orifice d'entrée dans le compartiment de pompage ;
utiliser un pulsar microfluidique pour fournir des fluctuations de pression dans le compartiment de pompage ;
fléchir ladite membrane perméable à l'oxygène dans une première direction en réponse aux pressions différentielles dans le compartiment de pompage de façon à déplacer le perfusât depuis le compartiment de perfusion à travers le premier orifice et dans l'organe ;
fléchir ladite membrane perméable à l'oxygène dans une deuxième direction opposée à ladite première direction pour déplacer le perfusât depuis le compartiment de stockage d'un organe à travers ledit deuxième orifice et dans ledit compartiment de perfusion ; et
retirer le gaz dudit dispositif de conservation d'un organe en permettant la perméation dudit gaz à travers ladite membrane perméable à l'oxygène dudit compartiment de perfusion vers ledit compartiment de pompage et faire sortir ledit gaz dudit compartiment de pompage.

12. Procédé selon la revendication 11, consistant en outre à :
fournir un boîtier isolé ; et
placer l'appareil de conservation d'un organe dans le boîtier isolé.

13. Procédé selon la revendication 12, consistant en outre à placer la source d'oxygène sous pression dans le boîtier isolé.

14. Procédé selon la revendication 12, consistant en outre à placer le pulsar microfluidique dans le boîtier isolé.

15. Procédé selon la revendication 12, consistant en outre à placer un ou plusieurs sachets froid dans le boîtier isolé.
